# FASCICULE DE BREVET EUROPEEN

(11) **EP 0 446 123 B1**
(45) Date de publication et mention de la délivrance du brevet: **26.05.1993**
(21) Numéro de dépôt: 91400593.9
(22) Date de dépôt: 05.03.1991
(51) Int. Cl.: F16L 27/08

(54) **Installation de connexion sélective temporaire à entrées et sorties de fluide multiples**
Einrichtung für eine vorübergehend wählbare Verbindung mehrerer Fluidein- und -ausgänge
Temporary alternative connection installation between multiple fluid entries and exits

(30) Priorité: 09.03.1990 FR 9003050
(43) Date de publication de la demande: 11.09.1991
(73) Titulaire: FMC EUROPE S.A., F-89103 Sens Cédex (FR)
(72) Inventeur: Le Devehat, Eugène, F-89100 Saligny (FR)
(74) Mandataire: Rinuy, Santarelli

(56) Documents cités:
- EP-A- 0 167 642
- DE-A- 2 329 715
- DE-C- 1 039 799
- GB-A- 956 908
- US-A- 2 980 150
- US-A- 3 262 742

## Description

L'invention concerne une installation de connexion sélective de l'une quelconque d'une pluralité de canalisations d'entrée à l'une quelconque d'une pluralité de canalisations de sortie. Elle vise notamment, mais non exclusivement, la circulation de produits pétroliers.

Le besoin se fait couramment sentir, dans les installations de distribution de fluide à lignes multiples, de pouvoir connecter l'une quelconque de plusieurs lignes d'entrée à l'une quelconque de plusieurs lignes de sortie, les nombres de lignes d'entrée et de sortie pouvant être importants, par exemple de l'ordre d'une quinzaine, voire plus.

On a déjà envisagé à cet effet de disposer dans des plans parallèles, les lignes d'entrée, d'une part, et les lignes de sortie, d'autre part, selon deux directions perpendiculaires de ces plans et de munir l'extrémité de chaque ligne d'un embout télescopique adapté à s'allonger parallèlement à ces plans, jusqu'au contact avec l'embout télescopique de l'une quelconque des lignes de l'autre catégorie. Mais cela présente divers inconvénients.

Ainsi, la mise en oeuvre de tels embouts télescopiques pose des problèmes d'étanchéité, de guidage et de tenue mécanique qui limite en pratique l'application de cette solution à des petits nombres de lignes d'entrée et de sortie.

A titre subsidiaire, cette solution se prête mal à une automatisation.

En outre et surtout, la mise en oeuvre de tronçons télescopiques implique nécessairement une variation de diamètre intérieur, ce qui dégrade localement de façon sensible l'efficacité d'un raclage visant à éliminer des parois d'une ligne d'entrée et d'une ligne de sortie temporairement connectées pour la distribution d'un liquide, des traces de celui-ci susceptibles de polluer un autre liquide que l'on ferait ensuite circuler dans l'une ou l'autre de ces lignes.

L'invention vise à pallier les inconvénients précités en proposant une "station d'aiguillage de liquides" formée de canalisations qui soient toutes raclables, qui se prête à la connexion éventuellement simultanée d'un grand nombre de lignes d'entrée à un grand nombre de lignes de sortie, selon toutes les combinaisons possibles et ce, de manière automatisable.

Elle propose à cet effet une installation de connexion sélective provisoire de l'un quelconque d'une pluralité de premiers tronçons fixes, à l'un quelconque d'une pluralité de seconds tronçons fixes comportant :
- une première pluralité ordonnée de premiers tronçons d'accouplement, présentant des brides d'accouplement longeant un plan fictif d'accouplement, mobiles avec un débattement donné le long d'une pluralité de premiers guides identiques adjacents parallèles à une première direction de ce plan fictif d'accouplement et décalés parallèlement à une seconde direction de ce plan fictif d'accouplement, et connectés chacun par l'une d'une pluralité de premières canalisations déformables à l'un de la pluralité de premiers tronçons fixes, lesquels premiers tronçons fixes sont au moins approximativement perpendiculaires à ce plan fictif d'accouplement et sont décalés parallèlement à cette seconde direction, et ces premières canalisations déformables étant déformables dans des plans de déformations parallèles à cette première direction ;
- une seconde pluralité ordonnée de seconds tronçons d'accouplement, présentant des brides d'accouplement longeant ce plan fictif d'accouplement, mobiles avec un débattement donné le long d'une pluralité de seconds guides identiques adjacents, au moins approximativement parallèles à cette seconde direction et décalés parallèlement à cette première direction, et connectés chacun par l'une d'une pluralité de secondes canalisations déformables à l'un de la pluralité de seconds tronçons fixes, lesquels seconds tronçons fixes sont au moins approximativement perpendiculaires au plan fictif d'accouplement et sont décalés parallèlement à cette première direction, et ces secondes canalisations déformables étant déformables dans des plans de déformation parallèles à cette seconde direction,

ladite pluralité de premiers guides étant dans son ensemble en regard de la pluralité de seconds guides prise dans son ensemble de sorte que chaque premier tronçon d'accouplement puisse venir en regard de l'un quelconque des seconds tronçons, et réciproquement,
chacun des premiers tronçons d'accouplement comportant un coupleur adapté à assujettir la bride de celui-ci à celle de l'un quelconque des seconds tronçons d'accouplement,
les premiers et seconds tronçons fixes, les premières et secondes canalisations déformables, et les premiers et seconds tronçons mobiles d'accouplement ayant un même diamètre intérieur constant.

Selon des dispositions préférées éventuellement combinées :
- chaque première canalisation déformable est formée d'au moins deux tronçons intermédiaires parallèles au plan de déformation associé parallèle à cette première direction et articulés entre eux et avec un des premiers tronçons fixes et l'un des premiers tronçons mobiles d'accouplement par des articulations coudées d'axes perpendiculaires à ce plan associé à ladite première canalisation déformable, et en ce que chaque seconde articulation déformable est formée d'au moins deux tronçons intermédiaires parallèles au plan de déformation associé parallèle à cette seconde direction et articulés entre eux et avec l'un des seconds tronçons fixes et l'un des seconds tronçons mobiles d'accouplement par des articulations coudées d'axes perpendiculaires à ce plan associé à ladite seconde canalisation déformable,
- les premières canalisations déformables ont des plans parallèles de déformation, perpendiculaires au plan fictif d'accouplement, et les secondes canalisations déformables ont des plans parallèles de déformation également perpendiculaires au plan fictif d'accouplement,
- chaque canalisation déformable est constituée de deux tronçons,
- la première direction est perpendiculaire à la seconde direction,
- la première direction est horizontale et la seconde direction est verticale,
- chaque premier ou second tronçon d'accouplement est monté sur un chariot, mobile entre deux des premiers ou seconds guides et commandé en mouvement par un moteur associé à ce chariot et contrôlé par un système centralisé de commande automatique,
- ce moteur est à commande hydraulique et est embarqué sur le chariot,
- chaque chariot est muni d'un détecteur de position adapté à détecter, sur un guide associé à ce chariot, des repères caractéristiques des positions d'accouplement possible de ce chariot,
- les premiers tronçons fixes d'une part, et les seconds tronçons fixes d'autre part, sont en nombres supérieurs à 5, par exemple compris entre 5 et 20, de préférence entre 8 et 20.

Des objets, caractéristiques et avantages de l'invention ressortent de la description qui suit, donnée à titre d'exemple non limitatif, en regard des dessins annexés sur lesquels :
- la figure 1 est une vue partielle en élévation d'une installation de connexion sélective de lignes d'entrée et de sortie conforme à l'invention, selon la flèche I de la figure 2, ne représentant qu'une seule canalisation de sortie,
- la figure 2 est une vue partielle de cette installation, selon la ligne brisée II-II de la figure 1, ne représentant qu'une seule canalisation d'entrée,
- les figures 3A et 3B en sont deux vues de détail montrant deux phases successives de l'accouplement d'une canalisation d'entrée et d'une canalisation de sortie,
- la figure 4 est une vue du coupleur des figures 3A et 3B selon les flèches IV des figures 5B et 6,
- les figures 5A et 5B en sont des demi-vues en coupe axiale, en configurations respectivement ouverte et fermée, selon les flèches V des figures 4 et 6,
- la figure 6 en est une vue en bout, selon les flèches VI des figures 4, 5A et 5B,
- la figure 7 est une vue partielle de principe de l'installation des figures 1 et 2 avec ses équipements hydrauliques, électriques et informatiques, et
- la figure 8 est une vue en élévation, analogue à la figure 1, d'une autre installation de connexion sélective, comportant une variante de réalisation des organes de manoeuvre des tronçons d'accouplement.

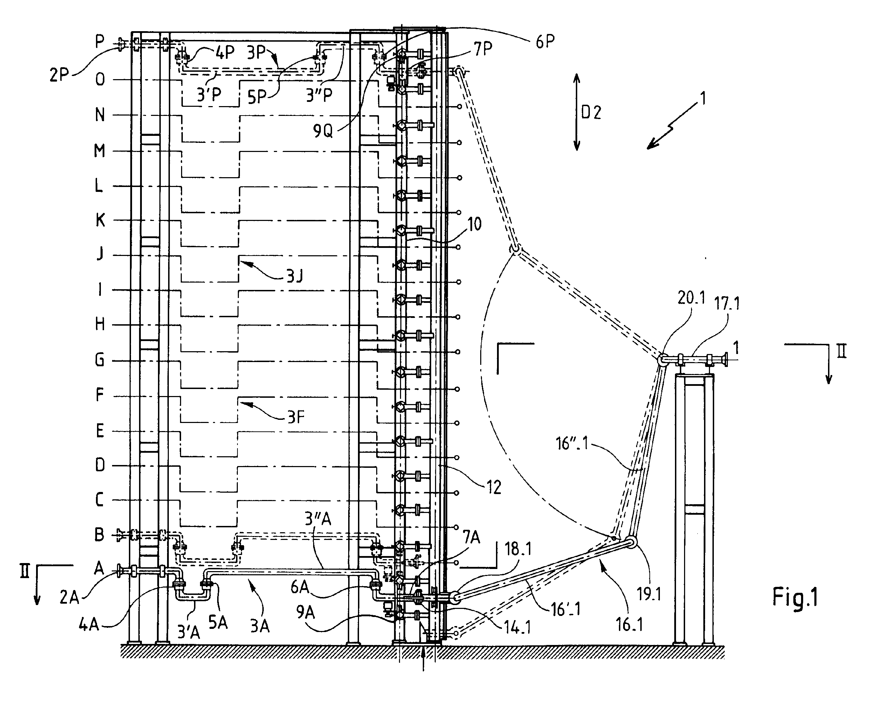

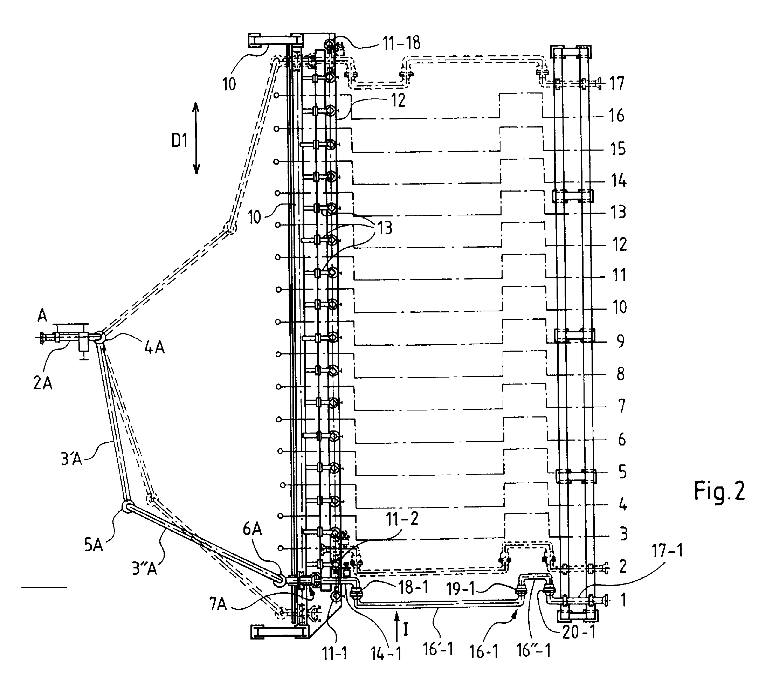

Les figures 1, 2 et 7 représentent une installation de connexion sélective, notée 1 dans son ensemble, adaptée à connecter au choix l'une quelconque de plusieurs lignes d'entrée, ici au nombre de 16 et notées de A à P, à l'une quelconque de plusieurs lignes de sortie, ici au nombre de 17 et notées de 1 à 17.

Cette installation comporte une pluralité de premiers tronçons fixes notés de 2A à 2P, ici d'axes parallèles horizontaux coplanaires dans un plan vertical et donc alignés parallèlement à une direction verticale et destinés à être raccordés aux lignes d'entrée. Ils sont terminés vers la droite par des extrémités coudées dirigées vers le bas.

A ces premiers tronçons fixes sont respectivement raccordées de premières canalisations déformables, 3A à 3P, qui sont identiques et formées ici par deux tronçons intermédiaires horizontaux, respectivement 3'A à 3'P, et 3''A à 3''P, terminés par des extrémités coudées dirigées soit vers le haut, soit vers le bas. L'extrémité coudée de chaque premier tronçon fixe 2A (...2P) est raccordée de façon étanche avec débattement en rotation, à une extrémité coudée d'un premier tronçon intermédiaire 3'A (... 3'P) pour former une première articulation coudée d'axe vertical 4A (... 4P). De même chaque premier tronçon intermédiaire horizontal 3'A (... 3'P) est raccordé à l'un 3''A (... 3''P) des seconds tronçons intermédiaires horizontaux par une seconde articulation coudée d'axe vertical 5A (... 5P), et ces seconds tronçons intermédiaires horizontaux sont raccordés par de troisièmes articulations coudées d'axe vertical 6A (... 6P) à une pluralité de premiers tronçons d'accouplement 7A à 7P. Les diverses extrémités coudées s'affrontent dans ces articulations dans des plans horizontaux confondus.

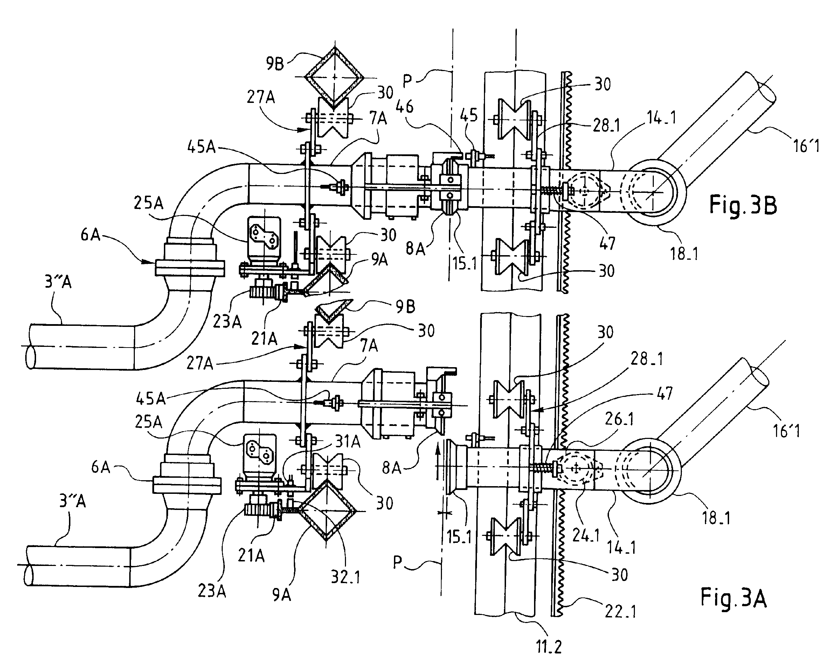

Ces premiers tronçons d'accouplement ont des axes horizontaux parallèles et présentent des brides d'accouplement 8A à 8P qui sont coplanaires, longeant un même plan fictif vertical d'accouplement noté P aux figures 3A et 3P.

Ces premiers tronçons d'accouplement sont mobiles le long de guides horizontaux identiques adjacents, ici en un nombre supérieur d'une unité à celui des tronçons d'entrée et notés 9A à 9Q, chaque premier tronçon d'accouplement passant entre deux guides.

Ces guides sont ici coplanaires dans un plan vertical, leurs extrémités étant assujetties à un portique rectangulaire 10.

En regard de l'ensemble de ces premiers guides disposés horizontalement et équidistants est disposée, parallèlement à celui-ci, une pluralité de guides verticaux identiques adjacents équidistants notés 11-1 à 11-18, ici assujettis à un second portique vertical rectangulaire 12, en pratique solidaire du premier cadre 10 par des entretoises 13.

Le long de ces guides verticaux sont montés coulissants de seconds tronçons d'accouplement 14-1 à 14-17 d'axes horizontaux parallèles, ici en un nombre inférieur d'une unité à celui des guides verticaux, chaque second tronçon d'accouplement passant entre deux tels guides.

Ces seconds tronçons d'accouplement comportent des brides d'accouplement 15-1 à 15-17 coplanaires, longeant le plan fictif d'accouplement P.

Comme les premiers et seconds portiques ou cadres 10 et 12 sont en regard et que les premiers et seconds tronçons d'accouplement longent le plan P de part et d'autre de celui-ci, n'importe lequel des premiers tronçons d'accouplement 7A à 7P est adapté à venir en regard de n'importe lequel des seconds tronçons d'accouplement et réciproquement.

Ces seconds tronçons d'accouplement sont raccordés respectivement à de secondes canalisations déformables 16-1 à 16-17 qui sont identiques et formées ici de deux tronçons intermédiaires situés dans des plans verticaux parallèles, respectivement 16'-1 à 16''-17. Ces secondes canalisations déformables se raccordent à une série horizontale de seconds tronçons fixes 17-1 à 17-17, d'axes parallèles coplanaires dans un plan horizontal, et destinés à être raccordés aux lignes de sortie.

Ces seconds tronçons d'accouplement, ces tronçons intermédiaires et ces seconds tronçons fixes ont des extrémités coudées à angle droit, vers la gauche ou vers la droite, formant conjointement de premières, secondes et troisièmes articulations coudées d'axe horizontal, respectivement notées 18-1 à 18-17, 19-1 à 19-17 et 20-1 à 20-17. Pour une même canalisation déformable, ces diverses extrémités coudées s'affrontent, dans des articulations, dans des plans verticaux confondus.

On appréciera que les premières canalisations déformables sont décalées verticalement et se déforment dans des plans parallèles aux premiers guides horizontaux et que les secondes canalisations déformables sont décalées horizontalement et se déforment dans des plans verticaux parallèles aux seconds guides, verticaux ; en fait, les premiers et seconds tronçons fixes décalés soit verticalement, soit horizontalement, sont disposés en opposition et ont des axes parallèles, perpendiculaires au plan fictif d'accouplement.

De la sorte, l'ensemble des premiers et seconds guides permet, de manière éventuellement simultanée, la mise en communication de n'importe lesquels des premiers tronçons fixes avec n'importe lesquels des seconds tronçons fixes.

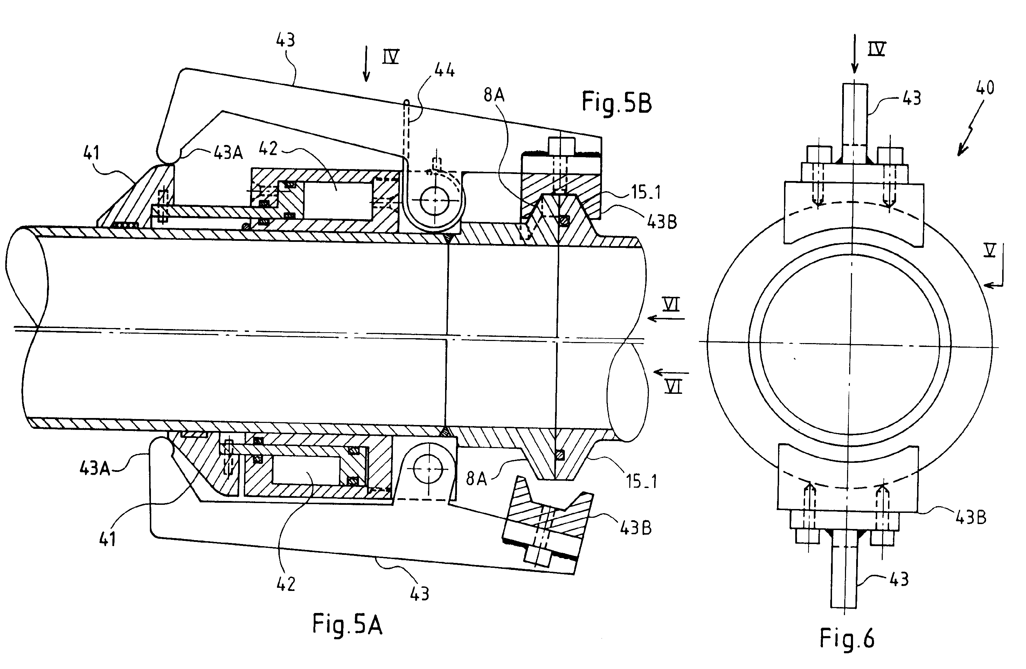

Le détail de guidage et de l'accouplement des premiers et seconds tronçons d'accouplement est donné aux figures 3 à 6, à propos du premier tronçon d'accouplement 7A avec le second tronçon d'accouplement 14-1.

Les divers guides 9A... et 11-2 sont ici de section prismatique ; plus précisément ils ont ici une forme en losange, en pratique carrée.

Le long de chaque guide sauf un (il y a un guide de plus que de tronçons d'accouplement) s'étend une crémaillère 21A ... ou 22-1 avec laquelle engrène un pignon 23A ... ou 24-1 porté par l'arbre d'un moteur 25A ... ou 26-1, 26-2 ... (en pratique un moteur hydraulique à rotation lente) embarqué par un chariot 27A ... ou 28-1, 28-2 ...

Chaque tronçon est muni de quatre galets rainurés 30, par exemple en polyuréthane, adaptés à rouler sur les arêtes en regard des guides entre lesquels doit circuler le chariot considéré.

En outre chaque premier chariot 27A... comporte un détecteur de position 31A... (en pratique un détecteur de proximité) tandis que sur un guide horizontal associé sont prévus des bossages 32-1 ... respectivement associés aux seconds tronçons d'accouplement et adaptés à être détectés par le détecteur de position 31A lorsque le premier tronçon d'accouplement 7A porté par ce chariot est en regard de l'emplacement dans lequel doit venir le second tronçon d'accouplement 14-1 associé à ce bossage pour être, le cas échéant, accouplé à ce premier tronçon d'accouplement.

De même, chaque second chariot 28-1... comporte un détecteur de position (non représenté) analogue à 31A... adapté à détecter l'un quelconque d'une série de bossages (non représentés) prévus sur le guide vertical associé à ce second chariot et respectivement associé aux positions possibles, le long de ce guide vertical, des divers premiers tronçons d'accouplement.

Cela permet des positionnements automatiques précis des chariots par les moteurs.

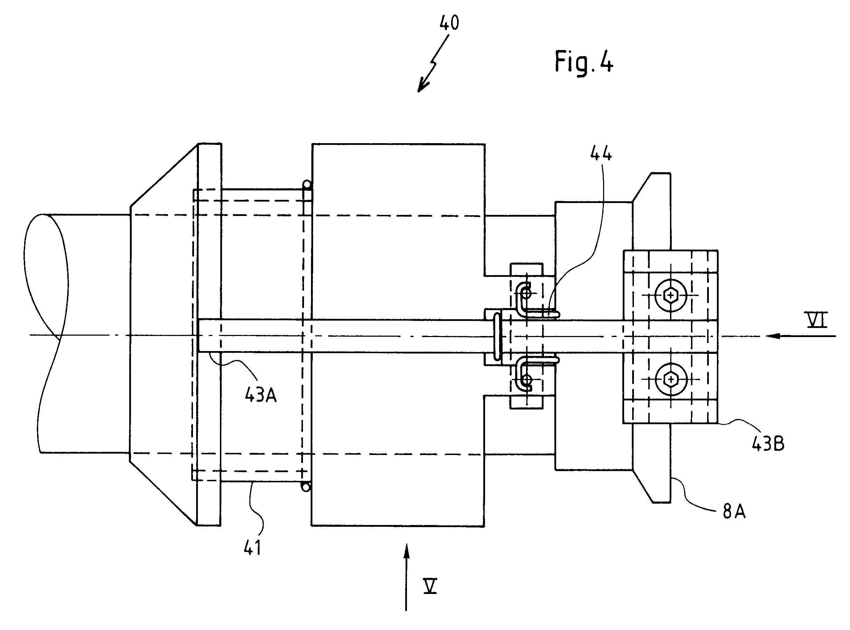

Sur chacun des premiers tronçons d'accouplement est monté un coupleur 40 de tout type connu approprié, ici à commande hydraulique, représenté à titre d'exemple aux figures 4 à 6. Il comporte principalement un manchon 41 formant came coulissant axialement autour du tronçon d'accouplement considéré en définissant une chambre 42 à volume variable communiquant avec un circuit de commande, de préférence hydraulique, et coopérant avec une pluralité de leviers 43 globalement orientés axialement autour d'axes transversaux, comportant à une extrémité un doigt de came 43A et à l'autre extrémité une machoire 43B adaptée à coiffer en les pressant l'une contre l'autre à la fois la bride 8A du tronçon 7A et la bride 15-1 ... de deuxième tronçon à lui assujettir.

Un organe élastique 44 tend à maintenir les machoires 43B écartées.

Des détecteurs 45 sont prévus sur chacun des seconds tronçons d'accouplement pour détecter des butées 46 des premiers tronçons d'accouplement, et contrôler ainsi la présence de l'un des premiers tronçons d'accouplement et l'ouverture ou la fermeture du coupleur 40. D'autre part, des détecteurs 45A sont prévus pour contrôler l'état ouvert/fermé du coupleur.

De préférence, pour autoriser un jeu (quelques millimètres) entre les brides des premiers et seconds tronçons d'accouplement lors de leurs mouvements relatifs, pour éviter toute dégradation de leurs surfaces d'affrontement et des joints d'étanchéité qui y sont prévus, un montage élastique comportant des ressorts 47, est prévu entre les brides 15-1... et les chariots associés, en sorte de forcer un recul de ces brides lors de l'écartement des mâchoires du coupleur associé, ces mâchoires assurant sur ces brides 15-1... un effet de came pour, à la fermeture, appliquer ces brides sur les brides 8A....

Des détecteurs de fin de course (non représentés) sont prévus aux extrémités des guides.

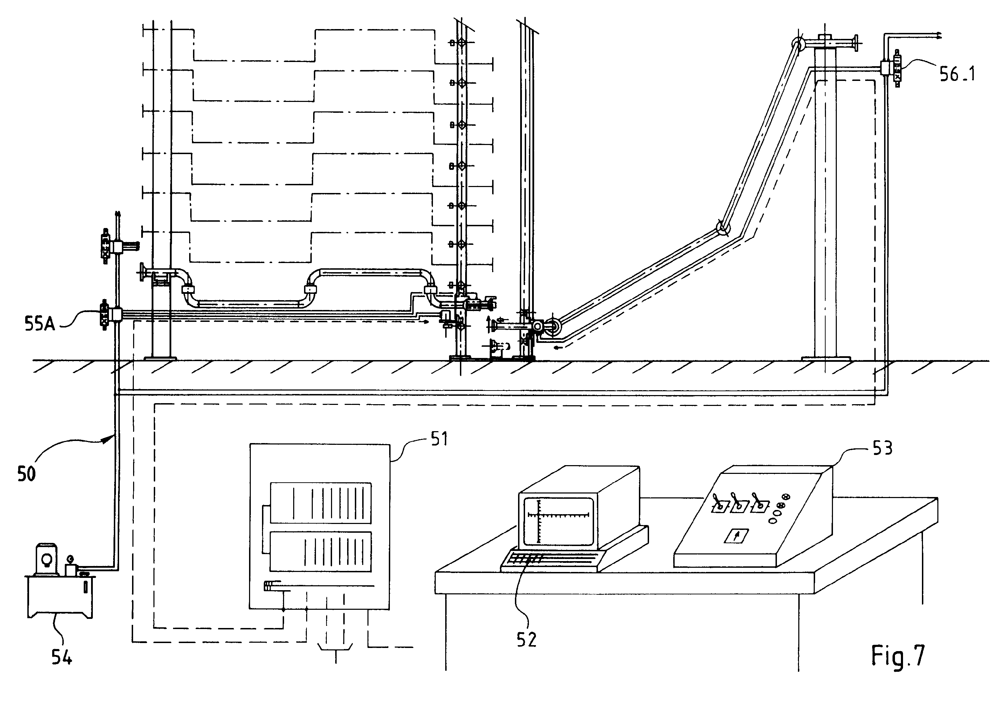

La figure 7 présente les principaux éléments constitutifs d'un système de commande automatique d'une telle installation : il comporte un circuit hydraulique 50 associé à un automate programmable 51, un écran de visualisation 52 et un éventuel poste manuel de commande 53.

Le circuit 50 comporte une centrale 54 de tout type connu approprié (comportant par exemple une pompe à 12 l/mn sous une pression de 140 bars) et, associé à chaque premier ou second tronçon fixe, un bloc de distribution 55A ... 56-1 ... et des flexibles aboutissant aux moteurs 25A ... 26-1 ... et aux coupleurs 40.

Lors de la manoeuvre en translation de chaque tronçon d'accouplement, le détecteur de position associé (par exemple 31A) transmet à l'automate une impulsion chaque fois qu'il détecte un bossage (par exemple 32-1). Ces impulsions sont comptabilisées et mémorisées par l'automate qui connaît donc la position de chaque tronçon d'accouplement. L'automate reçoît en fait les signaux des divers détecteurs et agit en conséquence sur les éléments électrohydrauliques du circuit hydraulique 50. Il s'agit par exemple d'un automate TELEMECANIQUE TSX47/30 ou équivalent.

L'écran 52 et son clavier permettent de saisir des données et de visualiser en temps réel l'état de l'installation, par exemple en indiquant le déroulement des déplacements de deux tronçons, selon une ligne et une colonne respectivement, jusque et y compris leur accouplement.

A titre d'exemple, l'opérateur choisit à l'aide de son clavier les numéros/lettres des tronçons à connecter.

Sur l'écran, apparaissent les positions instantanées de ces deux tronçons, disponibles ou non (libres ou encore accouplés par ailleurs).

Les opérations de connexions se déroulent dans l'ordre suivant (après d'éventuels désaccouplements s'il y a lieu) :
- déplacement du tronçon mobile horizontalement vers le point de connexion choisi, l'écran visualise la position en temps réel,
- arrêt sur la position prédéterminée,
- déplacement du tronçon mobile verticalement jusqu'à la détection de la position de raccordement,
- arrêt et blocage hydraulique de la motorisation,
- fermeture du coupleur hydraulique,
- l'écran de contrôle indique que la connexion est réalisée,
- une autorisation de transfert du produit est disponible dans l'automate pour utilisation dans le process général.

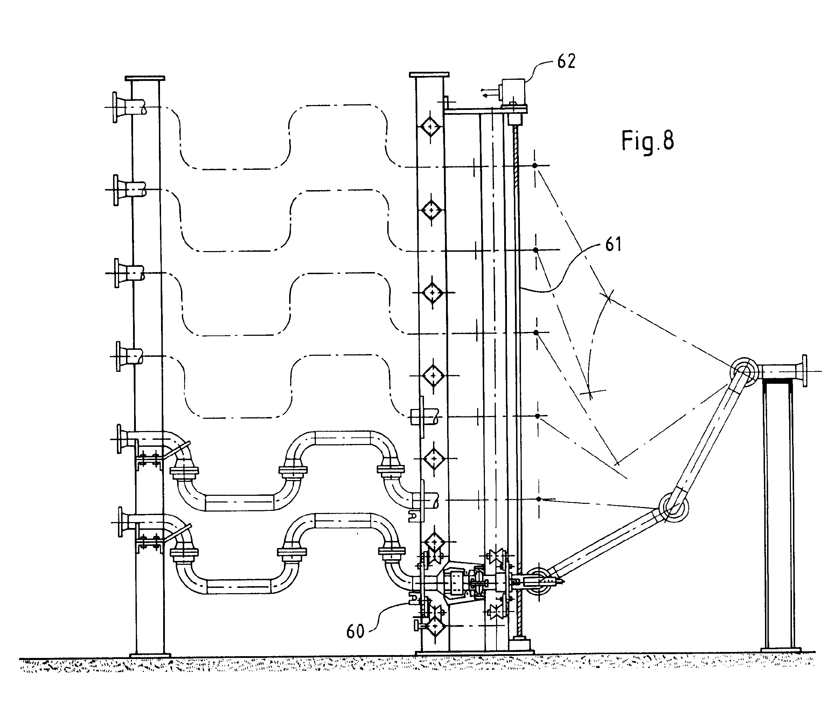

La figure 8 représente une variante de réalisation selon laquelle le déplacement des chariots est assuré par des blocs écrous 60 solidaires de ces chariots coopérant avec des vis 61 entraînées par des moteurs fixes 62.

A titre d'exemple, les portiques 10 et 12 ont environ 10 m de haut, 11 m de large, les plans contenant les axes des premiers tronçons fixes et des seconds tronçons fixes interceptant ces portiques selon leurs médianes respectivement verticale et horizontale, l'écartement entre tronçons adjacents étant de 0,6 m pour des diamètres extérieurs de 0,1 m, les premiers tronçons d'une part, et les seconds tronçons d'autre part, étant séparés d'une distance également voisine de 10 m.

## Revendications

1. Installation de connexion sélective provisoire de l'un quelconque d'une pluralité de premiers tronçons fixes (2A à 2P), à l'un quelconque d'une pluralité de seconds tronçons fixes comportant :
- une première pluralité ordonnée de premiers tronçons d'accouplement (7A à 7P), présentant des brides d'accouplement longeant un plan fictif d'accouplement (P), mobiles avec un débattement donné le long d'une pluralité de premiers guides identiques adjacents (9A à 9Q) parallèles à une première direction (D1) de ce plan fictif d'accouplement et décalés parallèlement à une seconde direction (D2) de ce plan fictif d'accouplement, et connectés chacun par l'une d'une pluralité de premières canalisations déformables (3A à 3P) à l'un de la pluralité de premiers tronçons fixes (2A à 2P), lesquels premiers tronçons fixes sont au moins approximativement perpendiculaires à ce plan fictif d'accouplement et sont décalés parallèlement à cette seconde direction, et ces premières canalisations déformables étant déformables dans des plans de déformations parallèles à cette première direction ;
- une seconde pluralité ordonnée de seconds tronçons d'accouplement (14-1 à 14-17), présentant des brides d'accouplement (15-1 à 15-17) longeant ce plan fictif d'accouplement, mobiles avec un débattement donné le long d'une pluralité de seconds guides identiques adjacents (11-1 à 11-18), au moins approximativement parallèles à cette seconde direction (D2) et décalés parallèlement à cette première direction (D1), et connectés chacun par l'une d'une pluralité de secondes canalisations déformables (16-1 à 16-17) à l'un de la pluralité de seconds tronçons fixes (17-1 à 17-17), lesquels seconds tronçons fixes sont au moins approximativement perpendiculaires au plan fictif d'accouplement et sont décalés parallèlement à cette première direction, et ces secondes canalisations déformables étant déformables dans des plans de déformation parallèles à cette seconde direction,
ladite pluralité de premiers guides étant dans son ensemble en regard de la pluralité de seconds guides prise dans son ensemble de sorte que chaque premier tronçon d'accouplement (7A à 7P)puisse venir en regard de l'un quelconque des seconds tronçons (17-1 à 17-17), et réciproquement,
chacun des premiers tronçons d'accouplement comportant un coupleur (40) adapté à assujettir la bride de celui-ci à celle de l'un quelconque des seconds tronçons d'accouplement,
les premiers et seconds tronçons fixes, les premières et secondes canalisations déformables, et les premiers et seconds tronçons mobiles d'accouplement ayant un même diamètre intérieur constant.

2. Installation de connexion selon la revendication 1, caractérisée en ce que chaque première canalisation déformable est formée d'au moins deux tronçons intermédiaires parallèles au plan de déformation associé parallèle à cette première direction et articulés entre eux et avec un des premiers tronçons fixes et l'un des premiers tronçons mobiles d'accouplement par des articulations coudées d'axes perpendiculaires à ce plan associé à ladite première canalisation déformable, et en ce que chaque seconde articulation déformable est formée d'au moins deux tronçons intermédiaires parallèles au plan de déformation associé parallèle à cette seconde direction et articulés entre eux et avec l'un des seconds tronçons fixes et l'un des seconds tronçons mobiles d'accouplement par des articulations coudées d'axes perpendiculaires à ce plan associé à ladite seconde canalisation déformable.

3. Installation de connexion selon la revendication 2, caractérisée en ce que les premières canalisations déformables ont des plans parallèles de déformation, perpendiculaires au plan fictif d'accouplement, et les secondes canalisations déformables ont des plans parallèles de déformation également perpendiculaires au plan fictif d'accouplement.

4. Installation de connexion selon la revendication 2 ou la revendication 3, caractérisée en ce que chaque canalisation déformable est constituée de deux tronçons.

5. Installation de connexion selon l'une quelconque des revendications 1 à 4, caractérisée en ce que la première direction est perpendiculaire à la seconde direction.

6. Installation de connexion selon l'une quelconque des revendications 1 à 5, caractérisée en ce que la première direction est horizontale et la seconde direction est verticale.

7. Installation de connexion selon l'une quelconque des revendications 1 à 6, caractérisée en ce que chaque premier ou second tronçon d'accouplement (7A à 7P) est monté sur un chariot, mobile entre deux des premiers ou seconds guides et commandé en mouvement par un moteur associé à ce chariot et contrôle par un système centralisé de commande automatique.

8. Installation de connexion selon la revendication 7, caractérisée en ce que ce moteur est à commande hydraulique et est embarqué sur le chariot.

9. Installation de connexion selon la revendication 7 ou la revendication 8, caractérisé en ce que chaque chariot est muni d'un détecteur de position adapté à détecter, sur un guide associé à ce chariot, des repères caractéristiques des positions d'accouplement possible de ce chariot.

10. Installation de connexion selon l'une quelconque des revendications 1 à 9, caractérisée en ce que les premiers tronçons fixes d'une part, et les seconds tronçons fixes d'autre part, sont en nombres supérieurs à 5.

## Patentansprüche

1. Vorrichtung zur zeitweisen, selektiven Verbindung eines einer Mehrzahl erster fester Abschnitte (2A bis 2P) mit einem einer Mehrzahl zweiter fester Abschnitte, umfassend:
- eine erste bestimmte Mehrzahl erster Kupplungsabschnitte (7A bis 7P) mit Kupplungsflanschen, die sich in einer fiktiven Kupplungsebene (P) erstrecken, mit einer entlang einer Mehrzahl erster, identischer und benachbart angeordneter Führungen (9A bis 9Q) gegebenen Bewegung bewegbar sind, welche Führungen parallel zu einer ersten Richtung (D1) der fiktiven Kupplungsebene und in einer zweiten Richtung (D2) der fiktiven Kupplungsebene parallel versetzt angeordnet sind, und die jeweils über eine einer Mehrzahl erster verformbarer Leitungen (3A bis 3P) mit einem der Mehrzahl erster fester Abschnitte (2A bis 2P) verbunden sind, welche ersten festen Abschnitte wenigstens annähernd senkrecht zu der fiktiven Kupplungsebene verlaufen und in der zweiten Richtung parallel versetzt sind, und wobei die ersten verformbaren Leitungen in zu der ersten Richtung parallel verlaufenden Verformungsebenen verformbar sind;
- eine zweite bestimmte Mehrzahl zweiter Kupplungsabschnitte (14-1 bis 14-17) mit Kupplungsflanschen (15-1 bis 15-17), die sich in der fiktiven Kupplungsebene erstrecken, mit einer entlang einer Mehrzahl zweiter, identischer und benachbart angeordneter Führungen (11-1 bis 11-18) gegebenen Bewegung bewegbar sind, welche Führungen zumindest annähernd parallel zu der zweiten Richtung (D2) und in der ersten Rich-tung (D1) parallel versetzt angeordnet sind, und die jeweils über eine einer Mehrzahl zweiter verformbarer Leitungen (16-1 bis 16-17) mit einem der Mehrzahl zweiter fester Abschnitte (17-1 bis 17-17) verbunden sind, welche zweiten festen Abschnitte wenigstens annähernd senkrecht zu der fiktiven Kupplungsebene verlaufen und in der ersten Richtung parallel ver-setzt sind, und wobei die zweiten verformbaren Lei-tungen in zu der zweiten Richtung parallel verlau-fenden Verformungsebenen verformbar sind,
wobei die Mehrzahl erster Führungen in ihrer Gesamtheit der Mehrzahl zweiter Führungen in ihrer Gesamtheit genommen derart gegenübersteht, daß jeder erste Kupplungsabschnitt (7A bis 7P) in Gegenüberlage zu einem beliebigen der zweiten Abschnitte (17-1 bis 17-17) kommen kann und umgekehrt,
wobei jeder der ersten Kupplungsabschnitte ein Kupplungselement (40) aufweist, welches zur Befestigung des Flansches dieses Kupplungsabschnitts mit dem Flansch eines beliebigen der zweiten Kupplungsabschnitte ausgebildet ist,
wobei die ersten und zweiten festen Abschnitte, die ersten und zweiten verformbaren Leitungen und die ersten und zweiten bewegbaren Kupplungsabschnitte gleichen konstanten Innendurchmesser aufweisen.

2. Verbindungsvorrichtung nach Anspruch 1, dadurch gekennzeichnet, daß jede erste verformbare Leitung von wenigstens zwei Zwischenabschnitten gebildet ist, die parallel zur zugeordneten, zur ersten Richtung parallel verlaufenden Verformungsebene angeordnet sind und die miteinander, mit einem der ersten festen Abschnitte und mit einem der ersten bewegbaren Kupplungsabschnitte durch gebogene Gelenke verbunden sind, deren Achsen senkrecht zu der der ersten verformbaren Leitung zugeordneten Ebene verlaufen, und daß jede zweite verformbare Leitung (jedes zweite verformbare Gelenk) von wenigstens zwei Zwischenabschnitten gebildet ist, die parallel zur zugeordneten, zur zweiten Richtung parallel verlaufenden Verformungsebene angeordnet sind und die miteinander, mit einem der zweiten festen Abschnitte und mit einem der zweiten bewegbaren Kupplungsabschnitte durch gebogene Gelenke verbunden sind, deren Achsen senkrecht zu der der zweiten verformbaren Leitung zugeordneten Ebene verlaufen.

3. Verbindungsvorrichtung nach Anspruch 2, dadurch gekennzeichnet, daß die ersten verformbaren Leitungen parallele Verformungsebenen aufweisen, die senkrecht zu der fiktiven Kupplungsebene verlaufen, und die zweiten verformbaren Leitungen parallele Verformungsebenen aufweisen, die ebenfalls senkrecht zu der fiktiven Kupplungsebene verlaufen.

4. Verbindungsvorrichtung nach Anspruch 2 oder 3, dadurch gekennzeichnet, daß jede verformbare Leitung von zwei Abschnitten gebildet ist.

5. Verbindungsvorrichtung nach einem der Ansprüche 1 - 4, dadurch gekennzeichnet, daß die erste Richtung senkrecht zur zweiten Richtung verläuft.

6. Verbindungsvorrichtung nach einem der Ansprüche 1 - 5, dadurch gekennzeichnet, daß die erste Richtung horizontal und die zweite Richtung vertikal verläuft.

7. Verbindungsvorrichtung nach einem der Ansprüche 1 - 6, dadurch gekennzeichnet, daß jeder erste bzw. zweite Kupplungsabschnitt (7A bis 7P) auf einem Karren angebracht ist, der zwischen zwei der ersten bzw. zweiten Führungen bewegbar ist und dessen Bewegung von einem diesem Karren zugeordneten Motor angetrieben und von einer zentralen, automatischen Steuervorrichtung gesteuert ist.

8. Verbindungsvorrichtung nach Anspruch 7, dadurch gekennzeichnet, daß der Motor hydraulisch gesteuert und auf dem Karren angeordnet ist.

9. Verbindungsvorrichtung nach Anspruch 7 oder 8, dadurch gekennzeichnet, daß der Karren mit einem Positionsdetektor versehen ist, der zur Erfassung von Markierungen auf einer diesem Karren zugeordneten Führung ausgebildet ist, welche Markierungen für mögliche Kupplungsstellungen dieses Karrens charakteristisch sind.

10. Verbindungsvorrichtung nach einem der Ansprüche 1 - 9, dadurch gekennzeichnet, daß mehr als 5 der ersten festen Abschnitte einerseits und der zweiten festen Abschnitte andererseits vorgesehen sind.

## Claims

1. Installation for the temporary selective connection of any one of a plurality of first fixed pipe lengths (2A to 2P) to any one of a plurality of second fixed pipe lengths, comprising:
- a first ordered plurality of first coupling pipe lengths (7A to 7P), having coupling flanges lying along an imaginary coupling plane (P), movable with a given range of movement along a plurality of first identical adjacent guides (9A to 9Q) parallel to a first direction (D1) of this imaginary coupling plane and offset parallel to a second direction (D2) of this imaginary coupling plane, and each connected by one of a plurality of first deformable pipes (3A to 3P) to one of the plurality of first fixed pipe sections (2A to 2P), which first fixed pipe sections are at least approximately perpendicular to this imaginary coupling plane and are offset parallel to this second direction, and these first deformable pipes being deformable in deformation planes parallel to this first direction;
- a second ordered plurality of second coupling pipe sections (14-1 to 14-17), having coupling flanges (15-1 to 15-17) lying along this imaginary coupling plane, movable with a given range of movement along a plurality of second identical adjacent guides (11-1 to 11-18), at least approximately parallel to this second direction (D2) and offset parallel to this first direction (D1), and each connected by one of a plurality of second deformable pipes (16-1 to 16-17) to one of the plurality of second fixed pipe sections (17-1 to 17-17), which second fixed pipe sections are at least approximately perpendicular to the imaginary coupling plane and are offset parallel to this first direction, and these second deformable pipes being deformable in deformation planes parallel to this second direction,
the said plurality of first guides being overall facing the plurality of second guides taken overall so that each first coupling pipe length (7A to 7P) can come opposite any one of the second pipe lengths (17-1 to 17-17), and vice versa,
each of the first coupling pipe lengths having a coupling (40) suitable for connecting its flange to the flange of any one of the second coupling pipe lengths,
the first and second fixed pipe lengths, the first and second deformable pipes and the first and second movable coupling pipe lengths having the same constant internal diameter.

2. Connection installation according to claim 1, characterised in that each first deformable pipe is formed by at least two intermediate pipe lengths parallel to the associated deformation plane parallel to this first direction and articulated to each other and on one of the first fixed pipe lengths and one of the first movable coupling pipe lengths by means of elbow joints with axes perpendicular to this plane associated with the said first deformable pipe, and in that each second deformable articulation is formed by at least two intermediate pipe sections parallel to the associated deformation plane parallel to this second direction and articulated to each other and on one of the second fixed pipe sections and one of the second movable coupling pipe sections by means of elbow joints with axes perpendicular to this plane associated with the said second deformable pipe.

3. Connection installation according to claim 2, characterised in that the first deformable pipes have parallel deformation planes, perpendicular to the imaginary coupling plane, and the second deformable pipes have parallel deformation planes also perpendicular to the imaginary coupling plane.

4. Connection installation according to claim 2 or claim 3, characterised in that each deformable pipe consists of two pipe sections.

5. Connection installation according to any one of claims 1 to 4, characterised in that the first direction is perpendicular to the second direction.

6. Connection installation according to any one of claims 1 to 5, characterised in that the first direction is horizontal and the second direction is vertical.

7. Connection installation according to any one of claims 1 to 6, characterised in that each first or second coupling pipe section (7A to 7P) is mounted on a carriage, movable between two of the first or second guides, and whose movement is controlled by a motor associated with this carriage and controlled by a centralised automatic control system.

8. Connection installation according to claim 7, characterised in that this motor is hydraulically controlled and is mounted on the carriage.

9. Connection installation according to claim 7 or claim 8, characterised in that each carriage is fitted with a position detector suitable for detecting, on a guide associated with this carriage, characteristic references of the possible coupling positions of this carriage.

10. Connection installation according to any one of claims 1 to 9, characterised in that the first fixed pipe sections on the one hand, and the second fixed pipe sections on the other, are greater than 5 in number.
